# EUROPEAN PATENT SPECIFICATION

(11) **EP 2 173 780 B1**
(45) Date of publication and mention of the grant of the patent: **23.05.2012**
(21) Application number: 08774605.3
(22) Date of filing: 01.07.2008
(51) Int. Cl.: C08F 230/08, C08F 2/38, C08F 222/10, C09D 143/04, C09D 5/16, C09D 133/04

(54) **BRANCHED POLYMER AND ANTIFOULING COATING COMPOSITION COMPRISING THE POLYMER**
VERZWEIGTES POLYMER UND ANTIFOULING-BESCHICHTUNGSZUSAMMENSETZUNG DAMIT
POLYMÈRE RAMIFIÉ ET COMPOSITION DE REVÊTEMENT ANTI-SALISSURES COMPRENANT LE POLYMÈRE

(30) Priority: 06.07.2007 NO 20073499
(43) Date of publication of application: 14.04.2010
(73) Proprietor: Jotun A/S, 3248 Sandefjord (NO)
(72) Inventor: DAHLING, Marit, N-3218 Sandefjord (NO)
(74) Representative: Campbell, Neil Boyd
(86) International application number: PCT/EP2008/058460
(87) International publication number: WO 2009/007276

(56) References cited:
- EP-A- 0 263 306
- EP-A- 1 201 700
- WO-A-03/070832

## Description

The present invention relates to a branched silyl ester copolymer and antifouling coating composition comprising the branched silyl ester copolymer.

Surfaces that are submerged in seawater are subjected to fouling by marine organisms such as green and brown algae, barnacles, mussel, tube worms and the like. On marine constructions such as vessels, oil platforms, buoys, etc. such fouling is undesired and has economical consequences. The fouling may lead to biological degradation of the surface, increased load and accelerated corrosion. On vessels the fouling will increase the frictional resistance which will cause reduced speed and increased fuel consumption and it can also result in reduced manoeuvrability.

To prevent settlement and growth of marine organisms antifouling paints are used. These paints generally comprise a film-forming binder, together with different components such as pigments, fillers, solvents and biologically active substances.

The most successful antifouling coating system on the market until 2003 was the tributyltin (TBT) self-polishing copolymer systems. The binder system of those antifouling coatings were linear acrylic copolymers with tributyltin pendant groups. In seawater the polymer was gradually hydrolysed releasing tributyltin, which is an effective biocide. The remaining acrylic copolymer, now containing carboxylic acid groups, became sufficiently soluble or dispersible in seawater to be washed out or eroded away from the coating surface. This self-polishing effect provided controlled release of the biological compounds in the coating resulting in the excellent antifouling efficiency and smooth surfaces and hence reduced frictional resistance.

The IMO Convention "International Convention on the Control of Harmful Antifouling Systems on Ships" of 2001 states that it is prohibited to apply new TBT containing antifouling coatings from 2003 and that TBT containing antifouling coatings will be prohibited on ship hulls from 2008.

In recent years new antifouling coating systems have been developed and introduced as a consequence of the TBT ban. One broad group of biocidal antifouling coatings on the market today are the self-polishing antifouling coatings which mimic the TBT self-polishing copolymer coatings. Those antifouling coatings are based on linear copolymers having pendant hydrolysable groups without biocidal properties. The hydrolysis mechanism is the same as in the TBT containing copolymers. This gives the same controlled dissolution of the polymers and thereby the controlled release of antifouling compounds from the coating film, resulting in similar performance as the TBT containing antifouling coating systems.

The most successful self-polishing antifouling systems today are based on linear silyl ester copolymers. Linear silyl ester copolymers and antifouling coating compositions comprising these polymers are, for example, described in US 4,593,055, EP 0 646 630, EP 1 127 902, EP 1 323 745, US 6,992,120, EP 1 479 737 and WO 031080747.

In order to modify the antifouling coating properties, various co-binders or other additives are comprised in the antifouling coating composition. For example, EP 0 775 733 which describes antifouling coating compositions comprising linear silyl ester copolymer and chlorinated paraffin, EP 0 802 243 which describes antifouling coating composition comprising rosin compound and linear silyl ester copolymer, EP 127 925 which describes antifouling composition comprising a linear silyl ester copolymer and a hydrophilic copolymer comprising lactam or amide groups, EP 1 277 816 which describes antifouling coating compositions comprising linear silyl ester copolymer and a metal carboxylate group containing polymer, WO 00/77102 which describes antifouling coating composition comprising linear silyl ester copolymer and fibres and WO 03/070832 which describes antifouling coating composition comprising a linear silyl ester copolymer and an incompatible polymer.

Silyl containing polymers are also usefull in other applications, such as moisture-hardering coating agents as disclosed in EP 0263306.

The object of the present invention Is to provide a branched silyl ester copolymer for use in antifouling coating compositions, and antifouling coating films, formed from the antifouling coating composition, with improved physical properties, controlled self-polishing properties and excellent antifouling performance.

Another object of the present invention is to provide an antifouling coating composition with reduced level of volatile organic compounds (VOC), which show a sufficiently low viscosity in order to be applied by common application methods.

Stricter regulations on the emission VOC are requiring the level of organic solvents in coating compositions to be reduced. For example, in EU the regulations limit the total emission of VOC from the shipyards and in the USA federal regulations limit the content of volatile organic hazardous air pollutants to less than 400 grams per litre for antifouling coatings. There is, accordingly, a need for antifouling coating compositions that comprise a lower content of VOC.

There are various ways to increase the solids content of the silyl ester copolymer solution in order to reduce the VOC content in the antifouling coating composition. An important factor is to maintain a low solution viscosity of the silyl ester copolymer solution when increasing the solids content. A common approach for linear polymers is to reduce the molecular weight of the polymer.

EP 1 641 862 describes linear silyl ester copolymers solutions having a solids content of at least 55 weight per cent, but not more than 80 weight per cent. The increased solids content of the copolymer solution is obtained by using linear silyl ester copolymers which have a weight-average molecular weight between 1,500 and 20,000 and high shear viscosity less than 20 Poise.

EP 0 802 243 describes an antifouling coating composition comprising a rosin compound and a linear silyl ester copolymer. It is mentioned that the linear silyl ester copolymer solution has a viscosity that can be regulated to obtain solids content between 5 and 90 % by weight. It is not disclosed in this document how a high solids copolymer solution can be obtained. In the examples only copolymers with solids content of 50 % by weight are described.

Low molecular weight linear polymers have less cohesive strength and lower glass transition temperature (T_{g}) than analogous higher molecular weight polymers. These properties will also influence the antifouling coating film properties. The molecular weight of the silyl ester copolymer has to be within certain limits, dependant on the copolymer composition, to avoid having negative effect on the antifouling coating film properties. Accordingly it is limited to what level the VOC content in the antifouling coating composition can be reduced by decreasing the molecular weight of a linear silyl ester copolymer.

It is well known that the polymer architecture will influence the polymer properties. Branching in polymers is a useful structural variable that can be used advantageously to modify polymer properties such as glass transition temperature (T_{g}), flexibility, solubility in organic solvents and miscibility in polymer blends. Improved solubility by branching of the polymer can be used to increase the solids content of the polymer solution and thereby reduce the VOC content in the coating compositions.

Silyl ester copolymers with a non-linear polymer structure and antifouling coating composition comprising the polymers have been described earlier.

WO 96/03465 describes an antifouling coating composition comprising a star polymer having at least 3 limbs from a central core. This document also includes silyl ester copolymers. The star structure of the polymer is obtained by using polyfunctional initiators or polyfunctional chain transfer agents, preferably polyfunctional mercaptan chain transfer agents. Antifouling coating composition containing at least 55 % by volume solids is claimed.

EP 1 201 700 describes the use of polyfunctional (poly)oxyalkylene mercaptan compounds to obtain star type silyl ester copolymers containing (poly)oxyalkylene blocks and antifouling coating compositions comprising these polymers. It is no claim on the solids content of the polymer solution or coating composition.

The star structures described in the two documents above are different from the branched structure in the present invention in the type and degree of branching. In a star structure the degree of branching is low since the number of branch points and the degree of branching are restricted by the functionality and the level of the chain transfer agent or initiator.

In recent years new polymerisations techniques and processes are developed to obtain branched, hyperbranched polymers or well-defined polymers with narrow molecular weight distribution (MWD) in order to reduce the solution viscosity. Hyperbranched and highly branched polymers are often prepared by step growth polymerisation techniques. This mode of synthesis is often multi-stage and complex. In general, it requires the use of protective group reactions and additional purifying operation after each stage, which makes synthesis not only time-consuming but also costly and not applicable in industrial scale. Branched polymers with a less controlled molecular weight distribution can be prepared by more simple, cost-effective processes.

WO 99/46301 describes a one-step process for preparing soluble branched polymers by comprising monofunctional vinylic monomers with a polyfunctional vinylic monomer as a crosslinker and a chain transfer agent. WO 99/46310 describes the same method as WO 99/46301, but the polymerisation is terminated before completion to obtain a polymer containing at least one polymerisable double bond, which makes the polymer useful as a component in a curable system. Silyl ester copolymers are not described in any of the documents. Both documents mention that the branched polymers are advantageously produced by a non-solution method, i.e. a method where the polymer is not soluble in the liquid carrier. It is not disclosed in any of the documents how a high solids content polymer solution can be obtained by solution polymerisation, i.e. a method where the polymer is soluble in the liquid carrier. In the examples the polymers prepared by solution polymerisation have a theoretical solids content of 35 % by weight before isolation of the polymer by precipitation. Coating composition made from polymer solutions having a solids content of 35 % by weight will not meet the VOC regulations.

The Inventor of the present invention found that by increasing the solids content in the examples of WO 99/46301 describing solution polymerisation to a solid content suitable for coating production, e.g. 50 % by weight, highly viscous materials or insoluble gels was obtained. However, polymer solutions having viscosities useful for paint manufacture with solids content above 55 % by weight and high conversion could easily be obtained when introducing one or more monomers with silyl ester functionality. This was a surprising result. The polymerisation conditions have to be carefully chosen in order to obtain a soluble branched silyl ester copolymer and not an insoluble cross-linked copolymer. The branched silyl ester copolymers of the present invention represent a versatile solution to obtain VOC compliant antifouling coating compositions containing silyl ester copolymer.

The branched silyl ester copolymers of the present invention are used in solution when preparing the antifouling paint composition. Therefore the branched silyl ester copolymer are preferably polymerised in a solvent or solvent mixture in which the branched silyl ester copolymer is soluble and which is suitable for use In the antifouling coating composition. By avoiding the process of isolating the polymers after production, the total amount of solvent used for manufacturing the branched silyl ester copolymer and the antifouling coating composition comprising the branched silyl ester copolymer Is reduced. This has an environmental benefit and reduces the cost of manufacture.

The use of branched silyl ester copolymers in the antifouling coating composition of the present invention has several advantages. The solution viscosity of the branched silyl ester copolymers is lower than the solution viscosity of analogous linear copolymers, so that antifouling coating compositions having higher solids content can be made with viscosity suitable for conventional application means, such as airless spray. The branched silyl ester copolymers are also more flexible than the linear analogues. The improved flexibility will result in antifouling coating film which exhibits less cracking tendency.

The branched polymer structure has no adverse effect on the self-polishing properties if properly designed.

The present invention provides a branched silyl ester copolymer, an antifouling coating composition comprising the branched silyl ester copolymer.

The branched silyl ester copolymer of the present invention comprises repeating units of (A) one or more monomers containing one polymerisable ethylenically unsaturated bond, of which at least one monomer is containing a silyl ester functionality, (B) one or more monomers containing two or more polymerisable ethylenically unsaturated bonds, and (C) one or more chain transfer agents, wherein the mole ratio of polymerisable ethylenically unsaturated units of the monomers (B) to chain transfer units of the chain transfer agents (C) is from 5 to 0.2.

The branched silyl ester copolymer of the present invention is preferably a copolymer wherein at least one of the monomers (A) is defined by the general formula (I): 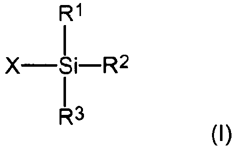 wherein
R¹, R² and R³ are each independently selected from the group consisting of linear or branched C₁-₂₀ alkyl groups, C₃₋₁₂ cycloalkyl groups and C₆₋₂₀ aryl groups;
X is an ethylenically unsaturated group, such as acryloyloxy group, methacryloyloxy group, (methacryloyloxy)alkylcarboxy group, maleinoyloxy group, fumaroyloxy group, itaconoyloxy group and citraconoyloxy group.

The aryl groups as definition of R¹, R² and R³ include substituted and unsubstituted phenyl, benzyl, phenalkyl and naphthyl.

The branched silyl ester copolymer of the present invention comprises one or more monomers (A) having silyl ester functionality as defined by the general formula (I) in the amount of 1-99 % by mole of the total mixture of monomers, more preferred 15-60 % by mole, most preferred 20-40% by mole.

Examples of monomers (A) containing silyl ester functionality defined by the general formula (I) include:
silyl ester monomers of acrylic acid and methacrylic acid, such as triethylsilyl (meth)acrylate, tri-*n*-propylsilyl (meth)acrylate, triisopropylsilyl (meth)acrylate, tri-*n-*butylsilyl (meth)acrylate, triisobutylsilyl (meth)acrylate, tri-*tert*-butylsilyl (meth)acrylate, tri-*sec*-butylsilyl (meth)acrylate, tri-*n*-pentylsilyl (meth)acrylate, triisopentylsilyl (meth)acrylate, tri-*n*-hexylsilyl (meth)acrylate, tri-*n*-octylsilyl (meth)acrylate, tri-*n*-dodecylsilyl (meth)acrylate, triphenylsilyl (meth)acrylate, tri-(*p*-methylphenyl)silyl (meth)acrylate, tribenzylsilyl (meth)acrylate, ethyldimethylsilyl (meth)acrylate, *n*-propyldimethylsilyl (meth)acrylate, isopropyldimethylsilyl (meth)acrylate, *n*-butyldimethylsilyl (meth)acrylate, isobutyldimethylsilyl (meth)acrylate, *tert*-butyldimethylsilyl (meth)acrylate, *n-*pentyldimethylsilyl (meth)acrylate, *n*-hexyldimethylsilyl (meth)acrylate, neohexyldimethylsilyl (meth)acrylate, *n*-octyldimethylsilyl (meth)acrylate, *n-*decyldimethylsilyl (meth)acrylate, dodecyldimethylsilyl (meth)acrylate, *n-*octadecyldimethylsilyl (meth)acrylate, cyclohexyldimethylsilyl (meth)acrylate, phenyldimethylsilyl (meth)acrylate, benzyldimethylsilyl (meth)acrylate, phenethyldimethylsilyl (meth)acrylate, (3-phenylpropyl)dimethylsilyl (meth)acrylate, *p-*tolyldimethylsilyl (meth)acrylate, isopropyldiethylsilyl (meth)acrylate, n-butyldiisopropylsilyl (meth)acrylate, *n*-octyldiisopropylsilyl (meth)acrylate, methyldi-*n*-butylsilyl (meth)acrylate, methyldicyclohexylsilyl (meth)acrylate, methyldiphenytsilyl (meth)acrylate, *tert-*butyldiphenylsilyl (meth)acrylate;
silyl ester monomers of maleic acid such as triethylsilyl ethyl maleate, tri-*n-*propylsilyl *n*-propyl maleate, triisopropylsilyl methyl maleate, tri-*n*-butylsilyl *n*-butyl maleate and tri-*n*-hexylsilyl *n*-hexyl maleate;
silyl ester monomers of fumaric acid such as triethylsilyl ethyl fumarate, tri-*n-*propylsilyl *n*-propyl fumarate, triisopropylsilyl methyl fumarate, tri-*n*-butylsilyl *n*-butyl fumarate and tri-*n*-hexylsilyl *n*-hexyl fumarate;
silyl esters monomers of carboxyalkyl (meth)acrylate such as triethylsiloxycarbonylmethyl (meth)acrylate, tri-*n*-propylsiloxycarbonylmethyl (meth)acrylate, triisopropylsiloxycarbonylmethyl (meth)acrylate, tri-*n-*butylsiloxycarbonylmethyl (meth)acrylate, triisobutylsiloxycarbonylmethyl (meth)acrylate, tri-*tert*-butylsiloxycarbonylmethyl (meth)acrylate, tri-*sec*-butylsiloxycarbonylmethyl (meth)acrylate, tri-*n*-pentylsiloxycarbonylmethyl (meth)acrylate, triisopentylsiloxycarbonylmethyl (meth)acrylate, tri-*n*-hexylsiloxycarbonylmethyl (meth)acrylate, tri-*n*-octylsiloxycarbonylmethyl (meth)acrylate, tri-*n-*dodecylsiloxycarbonylmethyl (meth)acrylate, triphenylsiloxycarbonylmethyl (meth)acrylate, tri-(*p*-methylphenyl)siloxycarbonylmethyl (meth)acrylate, tribenzylsiloxycarbonylmethyl (meth)acrylate, ethyldimethylsiloxycarbonylmethyl (meth)acrylate, *n-*propyldimethylsiloxycarbonylmethyl (meth)acrylate, isopropyldimethylsiloxycarbonylmethyl (meth)acrylate, *n*-butyldimethylsiloxycarbonylmethyl (meth)acrylate, isobutyldimethylsiloxycarbonylmethyl (meth)acrylate, *tert-*butyldimethylsiloxycarbonylmethyl (meth)acrylate, *n*-pentyldimethylsiloxycarbonylmethyl (meth)acrylate, *n*-hexyldimethylsiloxycarbonylmethyl (meth)acrylate, neohexyldimethylsiloxycarbonylmethyl (meth)acrylate, *n-*octyldimethylsiloxycarbonylmethyl (meth)acrylate, *n*-decyldimethylsiloxycarbonylmethyl (meth)acrylate, dodecyldimethylsiloxycarbonylmethyl (meth)acrylate, *n-*octadecyldimethylsiloxycarbonylmethyl (meth)acrylate, cyclohexyldimethylsiloxycarbonylmethyl (meth)acrylate, phenyldimethylsiloxycarbonylmethyl (meth)acrylate, benzyldimethylsiloxycarbonylmethyl (meth)acrylate, phenethyldimethylsiloxycarbonylmethyl (meth)acrylate, (3-phenylpropyl)dimethylsiloxycarbonylmethyl (meth)acrylate, *p-*tolyldimethylsiloxycarbonylmethyl (meth)acrylate, isopropyldiethylsiloxycarbonylmethyl (meth)acrylate, *n*-butyldiisopropylsiloxycarbonylmethyl (meth)acrylate, *n-*octyldiisopropylsiloxycarbonylmethyl (meth)acrylate, methyldi-n-butylsiloxycarbonylmethyl (meth)acrylate, methyldicyclohexylsiloxycarbonylmethyl (meth)acrylate, methyldiphenylsiloxycarbonylmethyl (meth)acrylate, *tert-*butyldiphenylsiloxycarbonylmethyl (meth)acrylate; and others as described in WO03/080747,

The monomers (A) without silyl ester functionality may comprise any monomer which can be polymerised by free-radical mechanism. Mixture of more than one monomer may be used to produce random, alternating, block or graft copolymers.

Examples of monomers (A) without silyl ester functionality include:
alkyl esters of acrylic acid and methacrylic acid such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, pentyl (meth)acrylate, hexyl (meth)acrylate, 2-ethylhexyl (meth)acrylate, n-octyl (meth)acrylate, isooctyl (meth)acrylate, 3,5,5-trimethylhexyl (meth)acrylate, decyl (meth)acrylate, isodecyl (meth)acrylate, dodecyl (meth)acrylate, isotridecyl (meth)acrylate, octadecyl (meth)acrylate;
cyclic alkyl esters of acrylic acid and methacrylic acid such as cyclohexyl (meth)acrylate, 4-tert-butylcyclohexyl (meth)acrylate, methyl (meth)acrylate, dicyclopentenyl (meth)acrylate, dicyclopentenyl oxyethyl (meth)acrylate, isobornyl (meth)acrylate;
aryl esters of acrylic acid and methacrylic acid such as phenyl (meth)acrylate, benzyl (meth)acrylate, naphthyl (meth)acrylate;
hydroxyalkyl ester of acrylic acid and methacrylic acid such as 2-hydroxyethyl (meth)acrylate, hydroxypropyl (meth)acrylate, hydroxybutyl (meth)acrylate, poly(ethylene glycol) (meth)acrylate, poly(propylene glycol) (meth)acrylate;
alkoxyalkyl and poly(alkoxy)alkyl ester of acrylic acid and methacrylic acid such as 2-methoxyethyl (meth)acrylate, 2-ethoxyethyl (meth)acrylate, 2-butoxyethyl (meth)acrylate, 2-phenoxyethyl (meth)acrylate, ethyl diglycol (meth)acrylate, ethyl triglycol (meth)acrylate, butyl diglycol (meth)acrylate, poly(ethylene glycol) methyl ether (meth)acrylate, poly(propylene glycol) methyl ether (meth)acrylate, tetrahydrofurfuryl (meth)acrylate, glycidyl (meth)acrylate;
monoalkyl and dialkyl aminoalkyl esters of acrylic acid and methacrylic acid such as 2-(dimethylamino)ethyl (meth)acrylate, 2-(diethylamino)ethyl (meth)acrylate, 3-(dimethylamino)propyl (meth)acrylate, 3-(diethylamino)propyl (meth)acrylate, 2-(*tert-*butylamino)ethyl (meth)acrylate;
amides of acrylic acid and methacrylic acid such as (meth)acrylamide, *N*-propyl (meth)acrylamide, *N*-isopropyl (meth)acrylamide, *N*-tert-butyl (meth)acrylamide, *N*-phenyl (meth)acrylamide, *N*-methylol (meth)acrylamide, *N*-(isobutoxymethyl) (meth)acrylamide, *N*-[3-(dimethylamino)propyl] (meth)acrylamide, diacetone (meth)acrylamide, *N,N*-dimethyl (meth)acrylamide;
metal salts of acrylic acid and methacrylic acid and other metal functional monomers, e.g. as described in EP 1 323 745;
other functional monomers of acrylic acid and methacrylic acid such as (meth)acrylonitrile, (2-acetoacetoxy)ethyl (meth)acrylate and monomers as described in WO 96/41842 and US 4 593 055;
esters of crotonic acid, maleic acid, fumaric acid, itaconic acid and citraconic acid such as methyl crotonate, ethyl crotonate, isobutyl crotonate, hexyl crotonate, dimethyl maleate, diethyl maleate, dibutyl maleate, maleic anhydride, dimethyl fumarate, diethyl fumarate, diisobutyl fumarate, dimethyl itaconate, dibutyl itaconate, itaconic anhydride, citraconic anhydride;
maleimide and N-substituted maleimides such as maleimide, N-phenyl maleimide and others as described in WO 96/41841;
vinyl esters such as vinyl acetate, vinyl propionate, vinyl butyrate, vinyl pivalate, vinyl dodecanoate, vinyl benzoate, vinyl 4-*tert*-butylbenzoate, VeoVa^{™} 9, VeoVa^{™} 10;
N-vinyl lactams, N-vinyl amides such as N-vinyl pyrrolidone, and other lactam and amide functional monomers as described in EP 1 127 902;
other vinyl monomers such as styrene, α-methyl styrene, vinyl toluene and *p*-chlorostyrene.

Example of the monomers (B) containing two or more polymerisable ethylenically unsaturated bonds include:
difunctional monomers such as ethylene glycol di(meth)acrylate, 1,3-butanediol di(meth)acrylate, 1,4-butanediol di(meth)acrylate, 1,5-pentanediol di(meth)acrylate, neopentyl glycol di(meth)acrylate, 1,6-hexanediol di(meth)acrylate, 1,9-nonanediol di(meth)acrylate, 1,10-decandiol di(meth)acrylate, 1,12-dodecandiol di(meth)acrylate, 1,4-cyclohexanediol di(meth)acrylate, cyclohexanedimethanol di(meth)acrylate, tricyclodecanedimethanol di(meth)acrylate, di(ethylene glycol) di(meth)acrylate, tri(ethylene glycol) di(meth)acrylate, tetra(ethylene glycol) di(meth)acrylate, poly(ethylene glycol) di(meth)acrylate, di(propylene glycol) di(meth)acrylate, tri(propylene glycol) di(meth)acrylate, tri(propylene glycol) ethoxylate di(meth)acrylate, neopentyl glycol propoxylate di(meth)acrylate, 1,6-hexanediol ethoxylate di(meth)acrylate, 1,6-hexanediol propoxylate di(meth)acrylate, glycerol di(meth)acrylate, pentaerythritol di(meth)acrylate monostearate, bisphenol A di(meth)acrylate, bisphenol A ethoxylate di(meth)acrylate, bisphenol A propoxylate di(meth)acrylate, 1,4-phenylene di(meth)acrylate, 3-(acryloyloxy)-2-hydroxypropyl methacrylate, allyl meth(acrylate), di(propylene glycol) allyl ether (meth)acrylate, methacrylic anhydride, crotonic anhydride, N,N'-methylene bis(meth)acrylamide, N,N'-ethylene bis(meth)acrylamide, N,N'-hexamethylene bis(meth)acrylamide, diurethane di(meth)acrylate, bis(2-methacryloyloxyethyl) phosphate, barium di(meth)acrylate, copper (II) di(meth)acrylate, magnesium di(meth)acrylate, zinc di(meth)acrylate, divinyl benzene, 1,4-butanediol divinyl ether, 1,6-hexanediol divinyl ether, 1,4-cyclohexanedimethanol divinyl ether, di(ethylene glycol) divinyl ether, tri(ethylene glycol) divinyl ether and poly(ethylene glycol) divinyl ether;
trifunctional monomer such as trimethylolpropane tri(meth)acrylate, trimethylolpropane ethoxylate tri(meth)acrylate, trimethylolpropane propoxylate tri(meth)acrylate and tris(2-hydroxyethyl)isocyanurate tri(meth)acrylate;
and polyfunctional monomers such as di(trimethylolpropane) tetra(meth)acrylate, pentaerythritol tetra(meth)acrylate, pentaerythritol ethoxylate tetra(meth)acrylate, dipentaerythritol penta(meth)acrylate and dipentaerythritol hexa(meth)acrylate.

The monomers (B) may be present in the amount of 0.1-25 % by mole of the total monomer (A) concentration. Preferably, the amount of monomer (B) present is 0.1-10 % by mole.

The preferred functionality of monomer (B) is 2 to 4 polymerisable ethylenically unsaturated bonds per molecule, more preferably 2 polymerisable ethylenically unsaturated bonds.

The chain transfer agent (C) may be chosen from a range of thiol compounds including monofunctional and multifunctional thiols.

Examples of monofunctional thiols include:
alkyl thiols such as 1-propanethiol. 2-propanethiol, 2-methyl-1-propanethiol, 2-methyl-2-propanethiol, 1-butanethiol, 2-butanethiol, 3-methyl-1-butanethiol, 1-pentanethiol, 1-hexanethiol, 1-heptanethiol, 1-octanethiol, *sec*-octanethiol, *tert*-octanethiol, 1-nonanethiol, *tert*-nonanethiol, 1-decanethiol, 1-dodecanethiol, *tert*-dodecanethiol, 1-tetradecanethiol, 1-hexadecanethiol, and 1-octadecanethiol;
thioglycolic acid and alkyl thioglycolates such as methyl thioglycolate, ethyl thioglycolate, 2-ethylhexyl thioglycolate, octyl thioglycolate and isooctyl thioglycolate;
mercaptopropionic acid and alkyl mercaptopropionates such as ethyl 2-mercaptopropionate, methyl 3-mercaptopropionate, ethyl 3-mercaptopropionate, butyl 3-mercaptopropionate, isooctyl 3-mercaptopropionate, octadecyl 3-mercaptopropionate and poly(propylene glycol) 3-mercaptopropionate;
other thiol compounds such as 11-mercapto undecanoic acid and 2-hydroxyethanethiol.

Examples of multifunctional thiols include:
difunctional thiol compounds such as 1,2-ethanedithiol, 1,3-propanedithiol, 1,4-butanedithiol, 2,3-butanedithiol, 1,5-pentanedithiol, 1,6-hexanedithiol, 1,8-octanedithiol, 1,9-nonanedithiol, 2,2'-(ethylenedioxy)diethanethiol, ethylene glycol bis(thioglycolate), ethylene glycol bis(2-mercaptopropionate) and ethylene glycol bis(3-mercaptopropionate);
trifunctional thiol compounds such as trimethylolpropane tris(2-mercaptoacetate), trimethylolpropane tris(2-mercaptopropionate), trimethylolpropane tris(3-mercaptopropionate) and trimethylolpropane ethoxylate tris(3-mercaptopropionate):
tetrafunctional thiol compounds such as pentaerythritol tetrakis(2-mercaptoacetate), pentaerythritol tetrakis (2-mercaptopropionate), pentaerythritol tetrakis(3-mercaptopropionate), dipentaerythritol hexakis(2-mercaptoacetate) and tripentaerythritol octakis(2-mercaptoacetate).

Alternative chain transfer agents may be any compounds that are known to reduce molecular weight in the polymerisation of ethylenically unsaturated monomers. Examples include sulphides such as di-*n*-butyl sulphide and di-*n*-butyl disulphide, halogen containing compounds, such as carbon tetrachloride and carbon tetrabromide and aromatic compounds such as α-methylstyrene dimer. Also, catalytic chain transfer agents such as metaloporphyrins, e.g. cobalt porphyrin compounds, are useful chain transfer agents for the invention. Catalytic chain transfer agents may be used in relatively low concentrations compared to conventional thiol chain transfer agents.

The use of multifunctional chain transfer agents is a useful way to increase the degree of branching in the polymer. Optionally, the chain transfer agent may comprise a mixture of more than one type of compound.

The preferred chain transfer agents are thiol compounds, more preferred monofunctional thiol compounds.

The amount of chain transfer agent (C) may be present in the amount of 0.1-25 % by mole of the total monomer (A) concentration. More preferred the amount of chain transfer agent present is 0.1-10 % by mole.

The branched silyl ester copolymer of the present invention is made using appropriate amounts of monomers (B) containing two or more polymerisable ethylenically unsaturated bonds to provide non-linear polymer and is counterbalanced with appropriate amounts of chain transfer agents (C) to prevent the formation of insoluble cross-linked polymer.

The mole ratio of polymerisable ethylenically unsaturated units of the monomers (B) to chain transfer units of the chain transfer agents (C) is from 5 to 0.2, more preferred from 2 and 0.5.

The branched silyl ester copolymer can be obtained by polymerising a mixture of monomers (A), monomers (B) and chain transfer agents (C) in the presence of a free-radical polymerisation initiator or catalyst using any of various methods well known and widely used in the art such as solution polymerisation, bulk polymerisation, emulsion polymerisation, and suspension polymerisation. In preparing a solvent borne coating composition from the polymer, it is advantageous to dilute the polymer with an organic solvent to obtain a polymer solution having a convenient viscosity for coating production. For this, it is also desirable to employ the solution polymerisation method or bulk polymerisation method.

Preferably, the polymerisation is conducted in a solvent or solvent mixture in which the branched silyl ester copolymer is soluble and which is suitable for use in the antifouling coating composition. The step of isolating the polymer is then avoided. This will require high conversion in the polymerisation process, preferably above 99%, to avoid unreacted monomers in the polymer solution. The level of unreacted monomers should be as low as possible, preferably below 1%, due to health and safety concerns associated with monomer exposure.

Preferably the branched polymer of the present invention is prepared by conventional radical polymerisation with optionally addition of a boost initiator. Addition of a boost initiator may increase the degree conversion of the polymerisation and thereby reducing the amount of unreacted monomers. The boost initiator can be the same or different from the initiator used for the polymerisation. It is selected from the same group of initiators as the polymerisation initiators.

Examples of free-radical polymerisation initiators include azo compounds such as 2,2'-azobis(2-methylbutyronitrile), 2,2'-azobis(isobutyronitrile) and 1,1'-azobis(cyanocyclohexane); peroxides such as *tert*-butyl peroxypivalate, *tert*-butyl peroxy-2-ethylhexanoate, *tert*-butyl peroxydiethylacetate, *tert*-butyl peroxyisobutyrate, *tert*-amyl peroxypivalate, *tert*-amyl peroxy-2-ethylhexanoate, 1,1-di(*tert*-amyl peroxy)cyclohexane and dibenzoyl peroxide; and mixtures thereof.

Preferred initiators are the azo initiators and *tert*-amyl peroxides.

The branched silyl ester copolymer of the present invention can be used as a component in an antifouling coating composition.

The branched silyl ester copolymer provides the antifouling coating with the necessary self-polishing properties. The polishing rate of the branched silyl ester copolymer can be adjusted by the type and amount of the silyl ester functional monomer(s) and the properties, such as hydrophilicity, hydrophobicity and flexibility, of the comonomers, crosslinkers and chain transfer agents.

The properties of the antifouling coating composition and the antifouling coating film can be adjusted further by addition of other components.

The antifouling coating composition of the present invention comprises the branched silyl ester copolymer and one or more other components. Preferably, the antifouling coating composition of the present invention comprises a branched silyl ester copolymer as defined hereinbefore, and one or more biologically active agents. Furthermore, the antifouling paint composition optionally comprises one or more components selected among other resins, pigments, extenders and fillers, dehydrating agents and drying agents, additives and solvents.

The biologically active compounds are any chemical compounds that prevent the settlement and growth of marine organisms.

Example of inorganic biologically active compounds include copper and copper compounds such as copper oxides, e.g. cuprous oxide and cupric oxide; copper alloys, e.g. copper-nickel alloys; copper salts, e.g. copper thiocyanate, copper sulphide; and barium metaborate.

Examples of organometallic biologically active compounds include zinc pyrithione; organocopper compounds such as copper pyrithione, copper acetate, copper naphthenate, oxine copper, copper nonylphenolsulfonate, copper bis(ethylenediamine)bis(dodecylbenzensulfonate) and copper bis(pentachlorophenolate); dithiocarbamate compounds such as zinc bis(dimethyldithiocarbamate), zinc ethylenebis(dithiocarbamate), manganese ethylenebis(dithiocarbamate) and manganese ethylene bis(dithiocarbamate) complexed with zinc salt;

Examples of organic biologically active compounds include heterocyclic compounds such as 2-(*tert*-butylamino)-4-(cyclopropylamino)-6-(methylthioyl,3,5-triazine, 4,5-dichloro-2-n-octyl-4-isothiazolin-3-one, 1,2-benzisothiazolin-3-one, 2-(thiocyanatomethylthio)-1,3-benzothiazole and 2,3,5,6-tetrachloro-4-(methylsulphonyl)pyridine; urea derivatives such as 3-(3,4-dichlorophenyl)-1,1-dimethylurea; amides and imides of carboxylic acids, sulphonic acids and sulphenic acids such as *N*-(dichlorofluoromethylthio)phthalimide, *N*-dichlorofluoromethylthio-*N',N'-*dimethyl-*N*-phenylsulfamide, *N*-dichlorofluoromethylthio-*N',N'*-dimethyl-*N*-p-tolylsulfamide and *N*-(2,4,6-trichlorophenyl)maleimide; other organic compounds such as pyridine triphenylborane, amine triphenylborane, 3-iodo-2-propynyl *N*-butylcarbamate, 2,4,5,6-tetrachloroisophthalonitrile and *p*-((diiodomethyl)sulphonyl)toluene.

Other examples may be tetraalkylphosphonium halogenides and guanidine derivatives.

The biologically active compounds may be used alone or in mixtures.

In addition to the branched silyl ester copolymer and biologically active compounds the antifouling coating composition according to the present invention optionally comprise one or more components selected among other resins, pigments, extenders and fillers, dehydrating agents and drying agents, additives, solvents and thinners.

An additional resin can be used to adjust the self-polishing properties and the mechanical properties of the antifouling coating film.

Examples of resins that can be used in addition to the branched silyl ester copolymer in the antifouling coating composition according to the present invention include:
rosin material such as wood rosin, tall oil rosin and gum rosin; rosin derivatives such as hydrogenated and partially hydrogenated rosin, disproportionated rosin, dimerised rosin, polymerised rosin, maleic acid esters, fumaric acid esters and other esters of rosin and hydrogenated rosin, copper resinate, zinc resinate, calcium resinate, magnesium resinate and other metal resinates of rosin and polymerised rosin and others as described in WO 97/44401;
resin acids and derivatives thereof such as copal resin and sandarach resin;
other carboxylic acid containing compounds such as abietic acid, neoabietic acid, dehydroabietic acid, dihydroabietic acid, tetrahydroabietic acid, secodehydroabietic acid, pimaric acid, paramatrinic acid, isoprimaric acid, levoprimaric acid, agathenedicarboxylic acid, sandaracopimalic acid, lauric acid, stearic acid, isostearic acid, oleic acid, linoleic acid, linolenic acid, isononanoic acid, versatic acid, naphthenic acid, tall oil fatty acid, coconut oil fatty acid, soyabean oil fatty acid and derivatives thereof;
acid functional polymers of which the acid group is blocked with divalent metals bonded to a monovalent organic residue, for example as described in EP 0 204 456 and EP 0 342 276; or divalent metals bonded to a hydroxyl residue, for example as described in GB 2 311 070 and EP 0 982 324; or amine for example as described in EP 0 529 693;
hydrophilic copolymers for example (meth)acrylate copolymers as described in GB 2 152 947 and poly(N-vinyl pyrrolidone) copolymers and other copolymers as described in EP 0526 441;
(meth)acrylic polymers and copolymers, such as poly(*n*-butyl acrylate), poly(*n-*butyl acrylate-*co*-isobutyl vinyl ether);
vinyl ether polymers and copolymers, such as poly(methyl vinyl ether), poly(ethyl vinyl ether), poly(isobutyl vinyl ether), poly(vinyl chloride-co-isobutyl vinyl ether);
polyesters for example as described in EP 1 033 392 and EP 1 072 625;
alkyd resins and modified alkyd resins;
other condensation polymers as described in WO 96/14362;
and polyurethanes.

Preferably, the other resin is a rosin material. In that case that the other resin is a rosin material, the branched silyl ester copolymer forms at least 10 % by weight of the total amount of resin in the antifouling coating composition, preferably at least 30% by weight, more preferably at least 50 % by weight up to 90 % by weight. The rosin material forms at least 5 % by weight to 90 % by weight of the total amount of resin in the antifouling coating composition, preferably at least 10 % by weight, more preferably up to 60% by weight.

The silyl ester copolymer is sensitive to hydrolysis in the presence of water. The dehydrating agents and drying agents are contributing to the storage stability of the antifouling coating composition by removing moisture introduced from raw materials, such as pigments and solvents, or water formed by reaction between carboxylic acid compounds and bivalent and trivalent metal compounds in the antifouling coating composition. The dehydrating agents and drying agents that may be used in the antifouling coating composition according to the present invention include organic and inorganic compounds. Examples of dehydrating agents and drying agents include anhydrous calcium sulphate, anhydrous magnesium sulphate, molecular sieves and zeolites; orthoesters such as trimethyl orthoformate, triethyl orthoformate, tripropyl orthoformate, triisopropyl orthoformate, tributyl orthoformate, trimethyl orthoacetate and triethyl orthoacetate; ketals; acetals; enolethers; orthoborates such as trimethyl borate, triethyl borate, tripropyl borate, triisopropyl borate, tributyl borate and tri-fert-butyl borate; silicates such as trimethoxymethyl silane, tetraethyl silicate and ethyl polysilicate; and isocyanates, such as p-toluenesulfonyl isocyanate.

The preferred dehydrating agents and drying agents are the inorganic compounds.

Examples of pigments are inorganic pigments such as titanium dioxide, iron oxides, zinc oxide, zinc phosphate, graphite and carbon black; organic pigments such as phthalocyanine compounds and azo pigments.

Examples of extenders and fillers are minerals such as dolomite, plastorite, calcite, quartz, barite, calcite, magnesite, aragonite, silica, wollastonite, talc, chlorite, mica, kaolin and feldspar; synthetic inorganic compounds such as calcium carbonate, barium sulphate, calcium silicate and silica; polymeric and inorganic microspheres such as hollow and solid glass beads, hollow and solid ceramic beads, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to an antifouling coating composition are reinforcing agents, thixotropic agents, thickening agents, plasticizers and solvents.

Examples of reinforcing agents are flakes and fibres. Fibres include natural and synthetic inorganic fibres such as silicon-containing fibres, carbon fibres, oxide fibres, carbide fibres, nitride fibres, sulphide fibres, phosphate fibres, mineral fibres; metallic fibres; natural and synthetic organic fibres such as cellulose fibres, rubber fibres, acrylic fibres, polyamide fibres, polyimide, polyester fibres, polyhydrazide fibres, polyvinylchloride fibres, polyethylene fibres and others as described in WO 00/77102. Preferably, the fibres have an average length of 25 to 2,000 µm and an average thickness of 1 to 50 µm with a ratio between the average length and the average thickness of at least 5.

Examples of thixotropic agents and thickening agents are silicas such as fumed silicas, organo-modified clays, amide waxes, polyamide waxes, polyethylene waxes, oxidised polyethylene waxes, hydrogenated castor oil wax, ethyl cellulose, aluminium stearates and mixtures of thereof.

Examples of plasticizers are chlorinated paraffins, phthalates, phosphate esters, sulphonamides, adipates and epoxidised vegetable oils.

Examples of organic solvents and thinners are aromatic hydrocarbons such as xylene, toluene, mesitylene; ketones methyl ethyl ketone, methyl isobutyl ketone, methyl isoamyl ketone, cyclopentanone, cyclohexanone; esters such as butyl acetate, tert-butyl acetate, amyl acetate, ethylene glycol methyl ether acetate; ethers such as ethylene glycol dimethyl ether, diethylene glycol dimethyl ether, dibutyl ether, dioxane, tetrahydrofuran, alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

Alternatively the coating can be dispersed in an organic non-solvent for the film-forming components in the coating composition or on an aqueous dispersion.

The present invention will be elucidated in the following examples.

### Examples

### Copolymer solutions

### General procedure for preparation of copolymer solution with post-heating

A quantity of solvent is charged to a temperature-controlled reaction vessel equipped with a stirrer, a condenser, a nitrogen inlet and a feed inlet. The reaction vessel is heated and maintained at the reaction temperature of 95°C. A pre-mix of monomers, chain transfer agent, initiator and solvent is prepared. The pre-mix is charged to the reaction vessel at a constant rate over 3 hours under a nitrogen atmosphere. After a further 30 minutes, post-addition of a boost initiator solution is added. The reaction vessel is maintained at the reaction temperature of 95°C for a further 2 hours. The temperature is then increased to 120°C, maintained at that temperature for a further 30 minutes and then cooled to room temperature.

Copolymer solutions S1 to S13 in Table 1 and Table 2 and S16 to 17 in Table 3 are prepared according to this procedure.

### General procedure for preparation of copolymer solution

A quantity of solvent is charged to a temperature-controlled reaction vessel equipped with a stirrer, a condenser, a nitrogen inlet and a feed inlet. The reaction vessel is heated and maintained at the reaction temperature of 95°C. A pre-mix of monomers, chain transfer agent, initiator and solvent is prepared. The pre-mix is charged to the reaction vessel at a constant rate over 3 hours under a nitrogen atmosphere. After a further 30 minutes, post-addition of a boost initiator solution is added. The reaction vessel is maintained at the reaction temperature of 95°C for a further 2 hours and is then cooled to room temperature.

Copolymer solutions S14 to S15 and S18 to S19 in Table 3 are prepared according to this procedure.

### Determination of copolymer solution viscosity

The viscosity of the polymers are determined in accordance with ASTM D2196 using a Brookfield DV-] viscometer with LV-2 or LV-4 spindle at 12 rpm. The polymers are temperated to 23.0°C ± 0.5°C before the measurements.

### Determination of solids content in the polymer solutions

The solids content in the polymer solutions are determined in accordance with ISO 3251. A test sample of 0.6 g ± 0.1 g are taken out and dried in a ventilated oven at 150°C for 30 minutes. The weight of the residual material is considered to be the non-volatile matter (NVM). The non-volatile matter content is expressed in weight percent. The value given is the average of three parallels.

### Determination of polymer average molecular weights

The polymers are characterised by Gel Permeation Chromatography (GPC) measurement. The weight-average molecular weight (Mw) and the number-average molecular weight (Mn) are determined using a GPC instrument with refractive index (RI) detector. The values given are relative to a polystyrene reference. The polydispersity index (PDI) is given as Mw/Mn.

This method gives the apparent molecular weights relative to a linear polystyrene standard and not the accurate molecular weights. The inaccuracy of the GPC molecular weights increases as the polymers become more branched. Branching is observed as a broadening of the molecular weight distribution.

### Determination of the glass transition temperature

The glass transition temperature (Tg) is obtained by Differential Scanning Calorimetry (DSC) measurements. The DSC measurements were performed on a TA Instruments DSC Q200. Samples of approx. 10 mg dry polymer material in open aluminum pans were used and scans were recorded at a heating and cooling rate of 10°C/min with an empty pan as reference.

The following abbreviations are used in Table 1 to Table 3:
- TiPSA: triisopropylsilyl acrylate
- TBSMA: tri-n-butylsilyl methacrylate
- TiPSCMMA: triispropylsilylcarboxymethyl methacrylate
- MEA: 2-methoxyethyl acrylate
- HEA: 2-hydroxyethyl acrylate
- MMA: methyl methacrylate
- AIBN: 2,2'-azodi(isobutyronitrile)
- AMBN: 2,2'-azodi(2-methylbutyronitrile)
- EGDMA: ethylene glycol dimethacrylate
- MAAn: methacrylic anhydride
- HP-A-MA: 3-acryloyloxy-2-hydroxypropyl methacrylate
- PETA-4: pentaerythritol tetraacrylate
- E2MP: ethyl 2-mercaptopropionate
- B3MP: butyl 3-mercaptopropionate
- MTG: methyl thioglycol
- HET: 2-hydroxyethanethiol
- DDT: dodecanethiol / dodecyl mercaptane

**Table 1: Ingredients and properties of silyl ester copolymer solutions S1 to S6**

| | | | **S1** | **S2** | **S3** | **S4** | **S5** |
|---|---|---|---|---|---|---|---|
| Reactor charge | Solvent | Xylene | 23.67 | 23.60 | 23.87 | 24.05 | 24.03 |
| Pre-mix charge | Monomers (Comp. A) | TiPSA | 38.60 | 38.23 | 36.88 | 34.55 | 36.67 |
| | | MEA | 4.40 | 4.36 | 4.20 | 3.94 | 4.18 |
| | | MMA | 22.00 | 21.78 | 21.01 | 19.69 | 20.90 |
| | Polyfunctional monomers (Comp. B) | EGDMA | - | 0.41 | 1.60 | 3.75 | - |
| | Chain transfer agents (Comp. C) | B3MP | - | 0.34 | 1.31 | 3.07 | 3.36 |
| | Initiator | AMBN | 0.66 | 0.66 | 0.48 | 0.30 | 0.31 |
| | Solvent | Xylene | 7.00 | 6.98 | 7.00 | 7.00 | 7.00 |
| Boost charge | Initiator | AMBN | 0.17 | 0.16 | 0.16 | 0.15 | 0.16 |
| | Solvent | Xylene | 3.50 | 3.49 | 3.50 | 3.50 | 3.50 |
| Comp. B in mole% of Comp. A | | | - | 0.5 | 2.0 | 5.0 | - |
| Comp. C in mole% of Comp. A | | | - | 0.5 | 2.0 | 5.0 | 5.0 |
| Properties of copolymer solutions | Theoretical NVM (wt%) | | 65 | 65 | 65 | 65 | 65 |
| | Actual NVM (wt%) | | 67.3 | 66.7 | 67.7 | 66.5 | 63.2 |
| | Viscosity (cP) | | 2,447 | 1,620 | 858 | 415 | 105 |
| | Mw (D) | | 21,036 | 16,604 | 11,212 | 9,400 | 3,628 |
| | PDI | | 2.70 | 2.68 | 2.80 | 3.30 | 1.74 |
| | Tg (°C) | | 29.8 | 29.0 | 23.7 | 12.2 | 4.0 |

The results in Table 1 show that the combination of Comp. B and Comp. C reduces the polymer solution viscosity compared to the linear reference polymer S1.

Copolymer S5 shows that the use of Comp. C only in the levels used in the branched silyl ester copolymers will give almost oligomeric material, i.e. material with very low Mw.

**Table 2: Ingredients and properties of silyl ester copolymer solutions S6 to S13**

| | | | **S6** | **S7** | **S8** | **S9** | **S10** | **S11** | **S12** | **S13** |
|---|---|---|---|---|---|---|---|---|---|---|
| Reactor charge | Solvent | Xylene | 23.62 | 23.54 | 23.43 | 23.11 | 23.75 | 24.17 | 23.48 | 23.53 |
| Pre-mix charge | Monomers (Comp. A) | TiPSA | 38.33 | 37.39 | 37.22 | 35.16 | 35.07 | 30.64 | 35.90 | 37.38 |
| | | META | 4.37 | 4.26 | 4.24 | 4.01 | 4.00 | 3.49 | 4.09 | 4.26 |
| | | MMA | 21.84 | 21.31 | 21.21 | 20.03 | 19.98 | 17.46 | 20.46 | 21.30 |
| | Polyfunctional monomers (Comp. B) | EGDMA | | 1.62 | 1.62 | | | 7.98 | 3.89 | 1.62 |
| | | MAAn | 0.32 | | | | | | | |
| | | HP-A-MA | | | | 4.12 | | | | |
| | | PETA-4 | | | | | 3.38 | | | |
| | Chain transfer agents (Comp. C) | E2MP | | | 1.09 | 2.58 | 2.58 | | | |
| | | B3MP | | | | | | 5.44 | 1.01 | 0.66 |
| | | MTG | 0.22 | | | | | | | |
| | | HET | | 0.64 | | | | | | |
| | Initiator | AMBN | 0.66 | 0.64 | 0.64 | 0.60 | 0.60 | 0.26 | 0.62 | 0.64 |
| | Solvent | Xylene | 6.98 | 6.96 | 6.92 | 6.82 | 7.00 | 7.00 | 6.93 | 6.95 |
| Boost charge | initiator | AMBN | 0.16 | 0.16 | 0.16 | 015 | 0.15 | 0.07 | 0.15 | 0.16 |
| | Solvent | Xylene | 3.49 | 3.48 | 3.46 | 3.41 | 3.50 | 3.50 | 3.46 | 3.48 |
| Comp. B in mole% of Comp. A | | | 0.5 | 2.0 | 2.0 | 5.0 | 2.5 | 12.0 | 5.0 | 2.0 |
| Comp. C in mole% of Comp. A | | | 0.5 | 2.0 | 2.0 | 5.0 | 5.0 | 10.0 | 3.3 | 1.0 |
| Properties of copolymer solutions | Theoretical NVM (wt%) | | 65 | 65 | 65 | 65 | 65 | 65 | 65 | 65 |
| | Actual NVM (wt%) | | 65.5 | 66.2 | 66.9 | 66.1 | 65.4 | 64.5 | 66.3 | 66.3 |
| | Viscosity (cP) | | 1,352 | 775 | 1,142 | 610 | 433 | 455 | 1,020 | 1,482 |
| | Mw (D) | | 16,578 | 10,529 | 12,485 | 12,275 | 12,685 | 22,929 | 13,783 | 18,236 |
| | PDI | | 2.62 | 2.46 | 2.94 | 4.27 | 4.55 | 8.17 | 3.46 | 3.16 |
| | Tg (°C) | | 30.0 | 25.8 | 25.5 | 16.6 | 12.3 | 7.6 | 27.6 | 27.9 |

The results in Table 2 show that branched silyl ester copolymers with reduced polymer solution viscosity can be obtained by combination of various types of Comp. B and Comp. C at different ratios and amounts.

**Table 3: Ingredients and properties of silyl ester copolymer solutions S14 to S19**

| | | | **S14** | **S15** | **S16** | **S17** | **S18** | **S19** |
|---|---|---|---|---|---|---|---|---|
| Reactor charge | Solvent | Xylene | 27.16 | 27.25 | 27.39 | 27.60 | 34.47 | 34.55 |
| Pre-mix charge | Monomers (Comp. A) | TiPSA | | | 32.89 | 29.53 | | |
| | | TBSMA | 26.69 | 24.00 | | | | |
| | | TiPSCMMA | | | | | 21.09 | 18.66 |
| | | HEA | | | 2.39 | 2.14 | | |
| | | MMA | 33.31 | 29.94 | 24.72 | 22.19 | 24.91 | 22.05 |
| | Polyfunctional monomers (Comp. B) | EGDMA | | | | 3.66 | | 2.91 |
| | | MAAn | | 2.96 | | | | |
| | Chain transfer agents (Comp. C) | B3MP | | 3.11 | | 2.48 | | 2.38 |
| | Initiator | AMBN | 0.67 | 0.60 | 0.48 | 0.29 | 0.50 | 0.44 |
| | Solvent | Xylene | 8.00 | 8.00 | 8.00 | 8.00 | 13.50 | 13.50 |
| Boost charge | Initiator | AMBN | 0.17 | 0.15 | 0.12 | 0.11 | 0.13 | 0.11 |
| | Solvent | Xylene | 4.00 | 4.00 | 4.00 | 4.00 | 5.40 | 5.40 |
| Comp. B in mole% of Comp. A | | | - | 5.0 | - | 5.0 | - | 5.2 |
| Comp. C in mole% of Comp. A | | | - | 5.0 | - | 5.0 | - | 5.2 |
| Properties of copolymer solutions | Theoretical NVM (wt%) | | 60 | 60 | 60 | 60 | 46 | 46 |
| | Actual NVM (wt%) | | 59.7 | 59.5 | 60.7 | 60.1 | 46.0 | 46.0 |
| | Viscosity (cP) | | 6,700 | 913 | 2,105 | 323 | 555 | 280 |
| | Mw (D) | | 28,128 | 21,733 | 27,184 | 16,666 | 36,061 | 67,367 |
| | PDI | | 2.31 | 5.95 | 3.04 | 5.23 | 2.67 | 12.95 |
| | Tg(°C) | | 50.7 | 26.9 | 51.8 | 29.9 | - | - |

The results in Table 3 show that branching can be obtained for various silyl ester copolymers.

The results in Table 1 to Table 3 show that the glass transition temperatures are lower for the branched copolymers compared with the linear polymer S1. This confirms that the branched polymers are more flexible than the analogous linear polymer. The results also show that the reduction in solution viscosity is not only related to a reduction in the average weight molecular weight, Mw, but also to the degree of branching.

### Comparative example 1

Example 26 of WO 99/46301 was repeated with increased solids content to prepare comparative example 1 (CS1). The composition is presented in Table 4.

### Comparative example 2

For comparative example 2 (CS2) the monomer composition of example 26 of WO 99/46301 was polymerised according to the general procedure used for the other copolymer examples. The composition is presented in Table 4.

**Table 4: Ingredients and properties of comparative polymer solutions CS1 and CS2**

| | | | **CS1** | **CS2** |
|---|---|---|---|---|
| Reactor charge | Monomers (Comp. A) | MMA | 48.08 | |
| | Polyfunctional monomers (Comp. B) | EGDMA | 0.96 | |
| | Chain transfer agents (Comp. C) | DDT | 0.96 | |
| | Initiator | AIBN | 0.48 | |
| | Solvent | Toluene | 49.52 | |
| | | Xylene | | 27.32 |
| Pre-mix charge | Monomers (Comp. A) | MMA | | 57.69 |
| | Polyfunctional monomers (Comp. B) | EGDMA | | 1.15 |
| | Chain transfer agents (Comp. C) | DDT | | 1.15 |
| | Initiator | AMBN | | 0.68 |
| | Solvent | Xylene | | 12.00 |
| Comp. B in wt% of Comp. A | | | 2.0 | 2.0 |
| Comp. C in wt% of Comp. A | | | 2.0 | 2.0 |
| Properties of copolymer solutions | Theoretical NVM (wt%) | | 50 | 60 |
| | Actual NVM (wt%) | | gel | gel |
| | Viscosity (cP) | | " | " |
| | Mw (D) | | " | " |
| | PDI | | " | " |
| | Tg (°C) | | " | " |

Both comparative examples formed insoluble gels in contrast to the silyl ester containing copolymers which form soluble materials at the same or higher solids content.

### Coating compositions

### General procedure for preparation of antifouling coating composition

The ingredients are mixed and ground to a fineness of < 30 µm using a high-speed disperser. Any ingredients sensitive to the high shear forces and temperature in the grinding process is added in the let-down. The general compositions of the coating compositions are presented in Table 5 and Table 6.

Some of the copolymer solutions were used for preparing coating compositions. An overview of the copolymer solutions used and the type of coating compositions prepared are presented in Table 7.

### Calculation of the volatile organic compound (VOC) content of the antifouling coating composition

The volatile organic compound (VOC) content of the antifouling coating composition is calculated in accordance with ASTM D5201.

### Determination of the viscosity of the antifouling coating composition

The high-shear viscosity of the antifouling coating composition is determined in accordance with ASTM D4287 using a cone-plate viscometer.

### Determination of polishing rates of antifouling coating films in sea water

The polishing rate is determined by measuring the reduction in film thickness of a coating film over time. For this test PVC disc are used. The coating compositions are applied as radial stripes on the disc using a film applicator. The thickness of the dry coating films are measured by means of a suitable electronic film thickness gauge. The PVC discs are mounted on a shaft and rotated in a container in which seawater is flowing through. Natural seawater which has been filtered and temperature-adjusted to 25°C ± 2°C is used. The PVC discs are taken out at regular intervals for measuring the film thickness. The discs are rinsed and allowed to dry overnight at room temperature before measuring the film thickness.

**Table 5: Ingredients of coating compositions Coat#1 to Coat#3**

| | | **Coat #1** | **Coat #2** | **Coat #3** |
|---|---|---|---|---|
| Binders | Copolymer solution (65% in xylene) | 15.42 | 22.34 | 19.54 |
| | Gum rosin solution (60% in xylene) | 7.94 | 4.34 | 10.06 |
| Biocides | Cuprous oxide | 39.38 | 24.84 | - |
| | Copper pyrithione | 1.70 | 1.64 | - |
| | Zinc pyrithione | - | - | 5.30 |
| Pigments | Iron oxide red | 1.89 | 2.18 | 2.52 |
| | Titanium dioxide | 0.94 | 1.11 | 1.29 |
| | Zinc oxide red seal | 8.12 | 11.19 | 21.31 |
| Extender | Talc | 4.58 | 4.71 | 6.95 |
| | Barium sulfate | 6.03 | - | |
| | Dolomite | - | 5.29 | - |
| | Zinc phosphate | - | 7.21 | - |
| | Nepheline syenite | - | - | 7.24 |
| | Solid glass beads 5 µm | - | - | 6.11 |
| Dehydrating agent | Calcium sulfate | 1.16 | 2.11 | 3.43 |
| Thixotropic agents | Disparlon A603-20X ⁽¹⁾ | 4.31 | 3.11 | 3.60 |
| | Disparlon 4401-25X ⁽²⁾ | 1.12 | 1.21 | 1.40 |
| Solvent | Xylene | 7.21 | 8.73 | 11.24 |
| Calculated TS vol% | | 58.0 | 57.0 | 57.0 |
| Calculated VOC (g/L) | | 390 | 393 | 392 |

| | | | | |
|---|---|---|---|---|
| (1) Disparlon A603-20X is an amide wax, 20% in xylene; produced by Kusumoto Chemicals, Ltd. (2) Disparlon 4401-25X is a polyethylene wax, 25% in xylene; produced by Kusumoto Chemicals, Ltd. | | | | |

**Table 6: Ingredients of coating compositions Coat#4 to Coat#7**

| | | **Coat #4** | **Coat #5** | **Coat #6** | **Coat # 7** |
|---|---|---|---|---|---|
| Binders | Copolymer solution (60% in xylene) | 18.42 | 24.48 | 23.32 | 30.03 |
| | Gum rosin solution (60% in xylene) | 7.91 | 4.33 | 10.01 | - |
| Plasticizer | Lutonal A 25 (3) | - | - | - | 1.80 |
| Biocides | Cuprous oxide | 39.23 | 24.77 | - | - |
| | Copper pyrithione | 1.70 | 1.63 | - | - |
| | Zinc pyrithione | - | - | 5.28 | 5.29 |
| Pigments | Iron oxide red | 1.89 | 2.17 | 2.51 | 2.52 |
| | Titanium dioxide | 0.94 | 1.11 | 1.28 | 1.28 |
| | Zinc oxide red seal | 8.09 | 11.16 | 21.21 | 21.25 |
| Extender | Talc | 4.56 | 4.69 | 6.92 | 6.93 |
| | Barium sulfate | 6.01 | - | - | - |
| | Dolomite | - | 5.27 | - | - |
| | Zinc phosphate | - | 7.19 | - | - |
| | Nepheline syenite | - | - | 7.21 | 7.22 |
| | Solid glass beads 5 µm | - | - | 6.08 | 6.09 |
| Dehydrating agent | Calcium sulfate | 1.16 | 2.11 | 3.43 | 3.42 |
| Thixotropic agents | Disparlon A603-20X ⁽¹⁾ | 4.29 | 3.10 | 3.58 | 3.59 |
| | Disparlon 4401-25X ⁽²⁾ | 1.11 | 1.21 | 1.39 | 1.40 |
| Solvent | Xylene | 4.69 | 6.77 | 7.78 | 9.20 |
| Calculated TS vol% | | 58.0 | 57.0 | 57.0 | 57.0 |
| Calculated VOC (g/L) | | 391 | 395 | 394 | 395 |

| | | | | | |
|---|---|---|---|---|---|
| (3) Lutonal A-25 is polyvinylether, produced by BASF AG. | | | | | |

**Table 7: Properties of coating compositions C1 to C31**

| | **Coating composition** | | **Coating properties** | |
|---|---|---|---|---|
| **Coating number** | **Coating formulation** | **Copolymer solution** | **Viscosity (cP)** | **Polishing rate (µm/year)** |
| C1 | | S2 | 260 | 29 |
| C2 | | S3 | 140 | 29 |
| C3 | | S4 | 120 | 28 |
| C4 | | S6 | 260 | 34 |
| C5 | | S7 | 180 | 41 |
| C6 | Coat #1 | S8 | 160 | 33 |
| C7 | | S9 | 180 | 34 |
| C8 | | S10 | 140 | 32 |
| C9 | | S11 | 140 | 31 |
| C10 | | S12 | 180 | 45 |
| C11 | | S13 | 220 | 34 |
| C12 | | S2 | 260 | 40 |
| C13 | | S3 | 140 | 32 |
| C14 | | S6 | 240 | 44 |
| C15 | Coat #2 | S7 | 180 | 50 |
| C16 | | S8 | 220 | 28 |
| C17 | | S9 | 140 | 30 |
| C18 | | S10 | 100 | 25 |
| C19 | | S2 | 220 | 58 |
| C20 | | S3 | 180 | 45 |
| C21 | | S4 | 140 | 17 |
| C22 | | S6 | 240 | 45 |
| C23 | Coat #3 | S7 | 180 | 56 |
| C24 | | S8 | 180 | 41 |
| C25 | | S9 | 160 | 43 |
| C26 | | S10 | 160 | 17 |
| C27 | | S11 | 100 | 10 |
| C28 | Coat #4 | S17 | 200 | 49 |
| C29 | Coat #5 | S17 | 180 | 34 |
| C30 | Coat #6 | S17 | 200 | 86 |
| C31 | Coat #7 | S15 | 280 | 83 |
| CC1 | SeaQuantum Classic LR ⁽⁴⁾ | | - | 17 |

| | | | | |
|---|---|---|---|---|
| (4) SeaQuantum Classic, light red is a silyl containing antifouling coating; produced by Jotun AS. | | | | |

Table 7 shows that all antifouling coating compositions have low viscosity and that the coating films show good polishing rates.

## Claims

1. A branched silyl ester copolymer comprising repeating units of (A) one or more monomers containing one polymerisable ethylenically unsaturated bond, of which at least one monomer is containing silyl ester functionality, (B) one or more monomers containing two or more polymerisable ethylenically unsaturated bonds, and (C) one or more chain transfer agents, wherein the mole ratio of polymerisable ethylenically unsaturated units of the monomers (B) to chain transfer units of the chain transfer agents (C) is from 5 to 0.2.

2. A branched silyl ester copolymer according to claim 1, wherein the mole ratio of polymerisable ethylenically unsaturated units of the monomers (B) to chain transfer units of the chain transfer agents (C) is from from 2 to 0.5.

3. A branched silyl ester copolymer according to claim 1 , wherein monomer (A) with silyl ester functionality is defined by the-general formula (I): 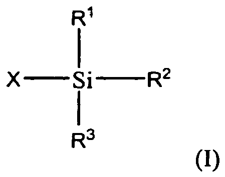 wherein
R¹, R² and R³ are each independently selected from the group consisting of linear or branched C₁₋₂₀ alkyl groups, C₃₋₁₂ cycloalkyl groups and C₆₋₂₀ aryl groups; X is an ethylenically unsaturated group, such as acryloyloxy group, methacryloyloxy group, (methacryloyloxy)alkylcarboxy group, maleinoyloxy group, fumaroyloxy group, itaconoyloxy group and citraconoyloxy group.

4. A branched silyl ester copolymer according to claim 3, wherein R¹, R² and R³ are each independently selected from methyl, isopropyl, n-butyl, isobutyl and phenyl.

5. A branched silyl ester copolymer according to claim 3 or 4, wherein X is acryloyloxy group or methacryloyloxy group.

6. A branched silyl ester copolymer according to any of claims 1 to 5, wherein one or more monomers (A) with silyl ester functionality is present in an amount of 1-99 % by mole of the total mixture of monomers, more preferred 15-60 % by mole, most preferred 20-40% by mole.

7. A branched silyl ester copolymer according to any of claims 1 to 6, wherein monomer (B) is present in an amount of 0.1 -25 % by mole of the total concentration of monomers (A), more preferred 0.1-10% by mole.

8. A branched silyl ester copolymer according to any of claims 1 to 7, wherein the functionality of monomer (B) is 2 to 4 polymerisable ethylenically unsaturated bonds per molecule, more preferred 2 polymerisable ethylenically unsaturated bonds per molecule.

9. A branched silyl ester copolymer according to any of claims 1 to 6, wherein the chain transfer agent (C) is present in an amount of 0.1-25 % by mole of the total concentration of monomers (A), more preferred 1-10 % by mole.

10. A branched silyl ester copolymer according to any of claims 1 to 6 and 9, wherein the chain transfer agent (C) is a thiol compound.

11. An antifouling coating composition comprising a branched silyl ester copolymer according to any of claims 1 to 10, and one or more other components, wherein said one or more other components are preferably one or more biologically active agents.

12. An antifouling coating composition according to claim 11, additionally comprising one or more components selected among other resins, pigments, extenders and fillers, dehydrating agents and drying agents, additives and solvents.

13. An antifouling coating composition according to claim 12, wherein other resins are rosin or rosin derivatives.

14. An antifouling coating composition according to any of claims 11 to 13,
wherein rosin or rosin derivatives are present in an amount of 5 to 90 % by weight of the total resins in the composition, preferably at least 10 % by weight, more preferably up to 60% by weight.

15. An antifouling coating composition according to any of claims 11 to 14, wherein dehydrating agents and drying agents are present therein.

## Patentansprüche

1. Verzweigtes Silylester-Copolymer, umfassend Wiederholungseinheiten von (A) einem oder mehreren Monomeren, die eine polymerisierbare ethylenisch nichtgesättigte Bindung enthalten, wovon wenigstens ein Monomer eine Silylesterfunktionalität enthält, (B) einem oder mehreren Monomeren, die zwei oder mehr polymerisierbare ethylenisch nichtgesättigte Bindung enthalten, und (C) einem oder mehreren Kettenübertragungsmitteln, wobei das Molverhältnis von polymerisierbaren ethylenisch nichtgesättigten Einheiten der Monomere (B) zu den Kettenübertragungseinheiten der Kettenübertragungsmittel (C) von 5 bis 0,2 beträgt.

2. Verzweigtes Silylester-Copolymer gemäß Anspruch 1, wobei das Molverhältnis von polymerisierbaren ethylenisch nichtgesättigten Einheiten der Monomere (B) zu den Kettenübertragungseinheiten der Kettenübertragungsmittel (C) von 2 bis 0,5 beträgt.

3. Verzweigtes Silylester-Copolymer gemäß Anspruch 1, wobei das Monomer (A) mit Silylesterfunktionalität durch die allgemeine Formel (I) definiert ist: 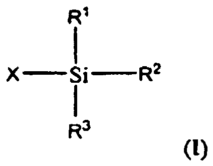 wobei
R¹, R² und R³ jeweils unabhängig ausgewählt sind aus der Gruppe bestehend aus linearen oder verzweigten C₁₋₂₀-Alkylgruppen, C₃₋₁₂-Cycloalkylgruppen und C₆₋₂₀-Arylgruppen; X eine ethylenisch nichtgesättigte Gruppe ist, wie z. B. eine Acryloyloxygruppe, Methacryloyloxygruppe, (Methacryloyloxy)alkylcarboxygruppe, Maleinoyloxygruppe, Fumaroyloxygruppe, Itaconoyloxygruppe und Citraconoyloxygruppe.

4. Verzweigtes Silylester-Copolymer gemäß Anspruch 3, wobei R¹, R² und R³ jeweils unabhängig ausgewählt sind aus Methyl, Isopropyl, n-Butyl, Isobutyl und Phenyl.

5. Verzweigtes Silylester-Copolymer gemäß Anspruch 3 oder 4, wobei X eine Acryloyloxygruppe oder Methacryloyloxygruppe ist.

6. Verzweigtes Silylester-Copolymer gemäß einem der Ansprüche 1 bis 5, wobei ein oder mehrere Monomere (A) mit Silylesterfunktionalität in einer Menge von 1-99 mole-% des gesamten Gemischs von Monomeren vorhanden ist, bevorzugter 15-60 mol-%, höchst bevorzugt 20-40 mol-%.

7. Verzweigtes Silylester-Copolymer gemäß einem der Ansprüche 1 bis 6, wobei Monomer (B) in einer Menge von 0,1-25 mol-% der Gesamtkonzentration von Monomeren (A) vorhanden ist, bevorzugter 0,1-10 mole.

8. Verzweigtes Silylester-Copolymer gemäß einem der Ansprüche 1 bis 7, wobei es sich bei der Funktionalität von Monomer (B) um 2 bis 4 polymerisierbare ethylenisch nichtgesättigte Bindungen pro Molekül handelt, bevorzugter 2 polymerisierbare ethylenisch nichtgesättigte Bindungen pro Molekül.

9. Verzweigtes Silylester-Copolymer gemäß einem der Ansprüche 1 bis 6, wobei das Kettenübertragungsmittel (C) in einer Menge von 0,1-25 mol-% der Gesamtkonzentration von Monomeren (A) vorhanden ist, bevorzugter 1-10 mol-%.

10. Verzweigtes Silylester-Copolymer gemäß einem der Ansprüche 1 bis 6 und 9, wobei das Kettenübertragungsmittel (C) eine Thiolverbindung ist.

11. Antifouling-Beschichtungszusammensetzung, umfassend ein verzweigtes Silylester-Copolymer gemäß einem der Ansprüche 1 bis 10 und eine oder mehrere andere Komponenten, wobei die eine oder mehrere andere Komponenten vorzugsweise ein oder mehrere biologisch wirksame Mittel sind.

12. Antifouling-Beschichtungszusammensetzung gemäß Anspruch 11, zusätzlich umfassend eine oder mehrere Komponenten, ausgewählt aus anderen Harzen, Pigmenten, Streckmitteln und Füllstoffen, Dehydratisierungsmitteln und Trockenmitteln, Zusatzstoffen und Lösungsmitteln.

13. Antifouling-Beschichtungszusammensetzung gemäß Anspruch 12, wobei andere Harze Kolophonium oder Kolophoniumderivate sind.

14. Antifouling-Beschichtungszusammensetzung gemäß einem der Ansprüche 11 bis 13, wobei Kolophonium oder Kolophoniumderivate in einer Menge von 5 bis 90 Gew.-% der gesamten Harze in der Zusammensetzung vorhanden sind, vorzugsweise wenigstens 10 Gew.-%, bevorzugter bis zu 60 Gel.-%.

15. Antifouling-Beschichtungszusammensetzung gemäß einem der Ansprüche 11 bis 14, wobei darin Dehydratisierungsmittel und Trockenmittel enthalten sind.

## Revendications

1. Copolymère d'ester de silyle ramifié comprenant des motifs de répétition de (A) un ou plusieurs monomères contenant une liaison insaturée éthylénique polymérisable, dont au moins un monomère contient une fonctionnalité ester de silyle, (B) un ou plusieurs monomères contenant deux liaisons insaturées. éthyléniques polymérisables ou plus, et (C) un ou plusieurs agents de transfert de chaîne, dans lequel le rapport molaire de motifs insaturés éthyléniques polymérisables des monomères (B) aux motifs de transfert de chaîne des agents de transfert de chaîne (C) est de 5 à 0,2.

2. Copolymère d'ester de silyle ramifié selon la revendication 1, dans lequel le rapport molaire de motifs insaturés éthyléniques polymérisables des monomères (B) aux motifs de transfert de chaîne des agents de transfert de chaîne (C) est de 2 à 0,5.

3. Copolymère d'ester de silyle ramifié selon la revendication 1 , dans lequel le monomère (A) avec une fonctionnalité ester de silyle est défini par la formule générale (I) : 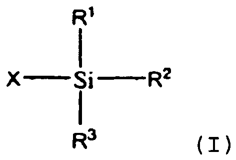 dans laquelle
R¹, R² et R³ sont chacun indépendamment choisis dans le groupe constitué de groupes alkyle en C₁₋₂₀ linéaires ou ramifiés, groupes cycloalkyle en C₃₋₁₂ et groupes aryle en C₆₋₂₀ ; X est un groupe insaturé éthylénique, tel qu'un groupe acryloyloxy, un groupe méthacryloyloxy, un groupe (méthacryloyloxy)alkylcarboxy, un groupe maléinoyloxy, un groupe fumaroyloxy, un groupe itaconoyloxy et un groupe citraconoyloxy.

4. Copolymère d'ester de silyle ramifié selon la revendication 3, dans lequel R¹, R² et R³ sont chacun indépendamment choisis parmi méthyle, isopropyle, n-butyle, isobutyle et phényle.

5. Copolymère d'ester de silyle ramifié selon la revendication 3 ou 4, dans lequel X est un groupe acryloyloxy groupe ou un groupe méthacryloyloxy.

6. Copolymère d'ester de silyle ramifié selon l'une quelconque des revendications 1 à 5, dans lequel un ou plusieurs monomères (A) avec une fonctionnalité ester de silyle est présent en une quantité de 1 à 99 % en moles du mélange total de monomères, plus préférablement de 15 à 60 % en moles, de manière préférée entre toutes de 20 à 40 % en moles.

7. Copolymère d'ester de silyle ramifié selon l'une quelconque des revendications 1 à 6, dans lequel le monomère (B) est présent en une quantité de 0,1 à 25 % en moles de la concentration totale de monomères (A), plus préférablement de 0,1 à 10 % en moles.

8. Copolymère d'ester de silyle ramifié selon l'une quelconque des revendications 1 à 7, dans lequel la fonctionnalité du monomère (B) est de 2 à 4 liaisons insaturées éthyléniques polymérisables par molécule, produit 2 liaisons insaturées éthyléniques polymérisables par molécule.

9. Copolymère d'ester de silyle ramifié selon l'une quelconque des revendications 1 à 6, dans lequel l'agent de transfert de chaîne (C) est présent en une quantité de 0,1 à 25 % en moles de la concentration totale de monomères (A), produit de 1 à 10 % en mole.

10. Copolymère d'ester de silyle ramifié selon l'une quelconque des revendications 1 à 6 et 9, dans lequel l'agent de transfert de chaîne (C) est un composé thiol.

11. Composition de revêtement antisalissure comprenant un copolymère d'ester de silyle ramifié selon l'une quelconque des revendications 1 à 10, et un ou plusieurs autres composants, dans laquelle lesdits un ou plusieurs autres composants sont de préférence un ou plusieurs agents biologiquement actifs.

12. Composition de revêtement antisalissure selon la revendication 11, comprenant en outre un ou plusieurs composants choisis parmi d'autres résines, pigments, extenseurs et charges, agents de déshydratation et agents de séchage, additifs et solvants.

13. Composition de revêtement antisalissure selon la revendication 12, dans laquelle d'autres résines sont la rosine ou des dérivés de rosine.

14. Composition de revêtement antisalissure selon l'une quelconque des revendications 11 à 13, dans laquelle la rosine ou les dérivés de rosine sont présents en une quantité de 5 à 90 % en poids des résines totales dans la composition, de préférence au moins 10 % en poids, plus préférablement jusqu'à 60 % en poids.

15. Composition de revêtement antisalissure selon l'une quelconque des revendications 11 à 14, dans laquelle les agents de déshydratation et agents de séchage sont présents dans celle-ci.
